# EUROPEAN PATENT APPLICATION

(11) **EP 4 796 282 A1**
(43) Date of publication of application: **26.08.2026**
(21) Application number: 26180593.1
(22) Date of filing: 14.04.2025
(51) Int. Cl.: B29C 45/06, B29C 45/17, B29C 45/83, B29C 45/04, B29C 45/64

(54) **VERTICAL MOLD CLAMPING APPARATUS, VERTICAL INJECTION MOLDING MACHINE, AND MAINTENANCE METHOD OF VERTICAL MOLD CLAMPING APPARATUS**

(30) Priority: 19.04.2024 JP 2024068361
(62) Document number(s) of the earlier application(s) in accordance with Art. 76 EPC: 25170396.3 / 4 635 708
(71) Applicant: The Japan Steel Works, Ltd., Tokyo 141-0032 (JP)
(72) Inventor: AMAUCHI, Yasuhiro, Shinagawa-ku, Tokyo, 141-0032 (JP); KAWAKITA, Masato, Shinagawa-ku, Tokyo, 141-0032 (JP)
(74) Representative: Simmons & Simmons LLP (Munich)

(57) **Abstract**

In one embodiment, a vertical mold clamping apparatus includes a fixed platen, a turntable placed on the fixed platen, and a plate which is provided between the fixed platen and the turntable and supports the turntable so as to be rotatable, and a lubricant is supplied from a lateral side of the plate to an upper surface of the plate that faces a lower surface of the turntable.

## Description

### CROSS REFERENCES TO RELATED APPLICATIONS

The present application claims priority to Japanese Patent Application No. 2024-068361 filed on April 19, 2024, the disclosure of which is incorporated herein by reference.

### TECHNICAL FIELD

This disclosure relates to a mold clamping apparatus and an injection molding machine.

### BACKGROUND

An injection molding machine made up of a mold clamping apparatus to which a molding die can be attached and an injection apparatus configured to supply a molding material to the molding die attached to the mold clamping apparatus has been known. In addition, a vertical injection molding machine has been known as an example of an injection molding machine.

Japanese Unexamined Patent Application Publication No. 2023-124025 (Patent Document 1) discloses a vertical injection molding machine provided with a turntable to which a molding die can be attached.

### SUMMARY

In a mold clamping apparatus and an injection molding machine provided with a movable plate member such as a turntable, it is required to maintain the smooth operation of the movable plate member for a long period of time.

In this disclosure, a vertical mold clamping apparatus according to one embodiment includes a fixed platen, a movable plate member which is placed on the fixed plate, and a plate which supports the movable plate member so as to be operable with respect to the fixed platen, and a lubricant is supplied from a lateral side of the plate to an upper surface of the plate that faces a lower surface of the movable plate member.

A vertical mold clamping apparatus according to another embodiment includes a fixed platen, a movable plate member which is placed on the fixed platen, and a plate which supports the movable plate member so as to be operable with respect to the fixed platen, and compressed air is sprayed toward the plate from a lower surface of the movable plate member that faces an upper surface of the plate.

In a maintenance method of a vertical mold clamping apparatus according to one embodiment, compressed air is supplied to a plate which is provided between a fixed platen and a movable plate member and supports the movable plate member so as to be operable, thereby purifying a surface of the plate.

According to this disclosure, a mold clamping apparatus and an injection molding machine in which the smooth operation of the movable plate member is maintained for a long period of time are realized.

### BRIEF DESCRIPTION OF DRAWINGS

FIG. 1 is a plan view schematically illustrating an operation side of a vertical injection molding machine according to one embodiment.
FIG. 2 is a perspective view illustrating a main part of a mold clamping apparatus according to one embodiment.
FIG. 3 is another perspective view illustrating the main part of the mold clamping apparatus according to one embodiment.
FIG. 4 is a cross-sectional view taken along the line A-A in FIG. 2.
FIG. 5 is a plan view illustrating an upper surface of a fixed platen in the mold clamping apparatus according to one embodiment.
FIG. 6A is an enlarged perspective view illustrating one plate in one embodiment.
FIG. 6B is an enlarged perspective view illustrating another one plate in one embodiment.
FIG. 7 is a plan view illustrating a fixed platen and a turntable in a mold clamping apparatus according to another embodiment.
FIG. 8A is a cross-sectional view taken along the line B-B in FIG. 7.
FIG. 8B is a cross-sectional view taken along the line C-C in FIG. 7.
FIG. 9 is a perspective view illustrating a main part of a mold clamping apparatus according to another embodiment.
FIG. 10A is an explanatory diagram illustrating a forward position of a slide plate illustrated in FIG. 9.
FIG. 10B is an explanatory diagram illustrating a backward position of the slide plate illustrated in FIG. 9.
FIG. 11 is a cross-sectional view taken along the line D-D in FIG. 9.

### DETAILED DESCRIPTION OF THE INVENTION

Some embodiments will be described in detail below with reference to drawings. Note that the same or substantially the same configurations and elements are denoted by the same reference characters in all the drawings for describing the embodiments. Also, the descriptions of the configurations and elements that have been once described will not be repeated in principle.

### (First Embodiment)

### [Outline of Vertical Injection Molding Machine]

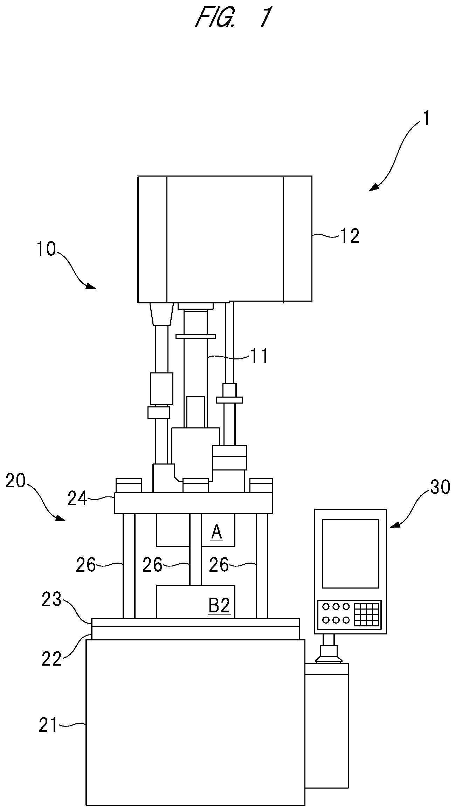

FIG. 1 is a plan view schematically illustrating an operation side of a vertical injection molding machine 1 according to this embodiment. The vertical injection molding machine 1 includes an injection apparatus 10, a vertical mold clamping apparatus 20, and a controller 30. In the following description, the vertical injection molding machine 1 may be abbreviated as an "injection molding machine 1" and the vertical mold clamping apparatus 20 may be abbreviated as a "mold clamping apparatus 20".

The injection apparatus 10 is arranged above the mold clamping apparatus 20, and the controller 30 is arranged on a lateral side of the mold clamping apparatus 20. The controller 30 comprehensively controls the injection apparatus 10 and the mold clamping apparatus 20 and causes them to execute various operations.

For example, the controller 30 causes the injection apparatus 10 to measure and inject a molding material. Also, the controller 30 causes the mold clamping apparatus 20 to open and close the molding die and perform the mold clamping.

A plurality of molding dies of the same type or different types can be attached to the mold clamping apparatus 20. Therefore, the injection molding machine 1 provided with the mold clamping apparatus 20 is particularly suitable for the multi-material molding and the insert molding. Understandably, the molding performed by the injection molding machine 1 is not limited to the multi-material molding and the insert molding.

### <Injection Apparatus>

The injection apparatus 10 includes a heating cylinder 11. A screw driven by a driving mechanism 12 is provided in the heating cylinder 11. The injection apparatus 10 further includes a lifting mechanism configured to integrally lift and lower at least the heating cylinder 11, the screw, and the driving mechanism 12.

A raw material such as resin pellets is supplied to the heating cylinder 11. The heating cylinder 11 heats and melts the supplied raw material. The driving mechanism 12 rotates the screw to knead the molten raw material (molten resin). Further, the driving mechanism 12 moves the screw in an axial direction to inject the molten resin from the heating cylinder 11.

More specifically, the driving mechanism 12 pushes down the screw to inject the molten resin from a nozzle provided at a tip end (lower end) of the heating cylinder 11.

### <Mold Clamping Apparatus>

The mold clamping apparatus 20 includes a housing 21, a fixed platen 22, a movable plate member 23, and a movable platen 24. The fixed platen 22 is fixed to the housing 21, and the movable plate member 23 is placed on the fixed platen 22.

The movable plate member 23 in this embodiment is a turntable operable (rotatable) with respect to the fixed platen 22.

The movable platen 24 is arranged above the fixed platen 22 and the turntable 23. More specifically, the movable platen 24 is arranged above the turntable 23 placed on the fixed platen 22 and faces the turntable 23.

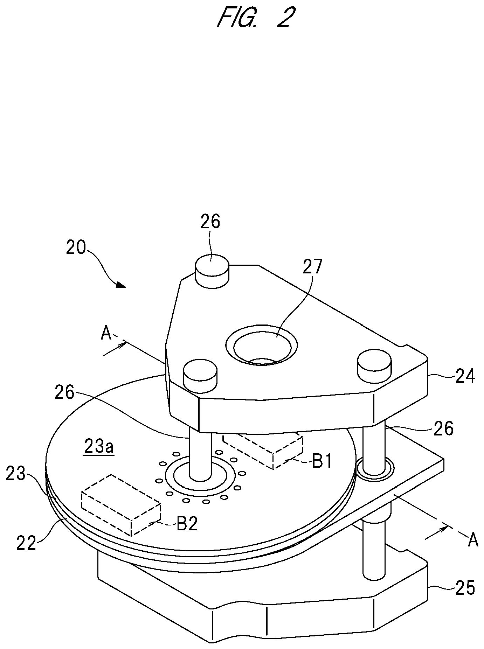

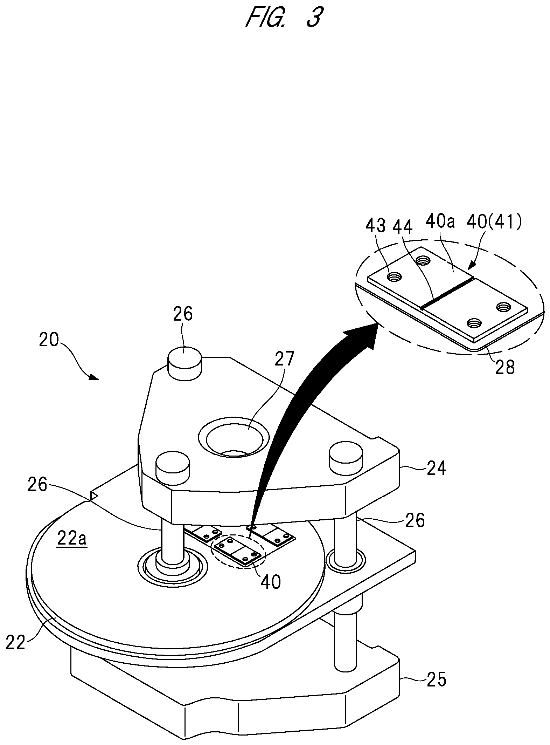

Though not illustrated in FIG. 1, another movable platen 25 different from the movable platen 24 is provided below the fixed platen 22 (FIG. 2, FIG. 3). Therefore, in the following description, the movable platen 24 may be referred to as an "upper movable platen 24" and the movable platen 25 may be referred to as a "lower movable platen 25" for distinction. Further, a toggle-type mold clamping mechanism is provided between the fixed platen 22 and the lower movable platen 25.

### <Upper Movable Platen, Tie Bar>

FIG. 2 and FIG. 3 are perspective views illustrating the main part of the mold clamping apparatus 20. Note that the turntable 23 illustrated in FIG. 2 is omitted in FIG. 3. The upper movable platen 24 is supported so as to be capable of ascending and descending and can move up and down.

From another perspective, the upper movable platen 24 can move in a direction approaching the fixed platen 22 (die closing direction) and a direction away from the fixed platen 22 (die opening direction).

Three tie bars 26 extend vertically through the fixed platen 22. An upper part of each tie bar 26 is connected to the upper movable platen 24, and a lower part of each tie bar 26 is connected to the lower movable platen 25. From another perspective, the upper movable platen 24 and the lower movable platen 25 are connected by the three tie bars 26.

The upper movable platen 24 is driven up and down by a ball-screw die opening and closing mechanism. At this time, the tie bars 26 guide the movement (ascending and descending) of the upper movable platen 24. The die opening and closing mechanism is controlled by the controller 30 illustrated in FIG. 1. The controller 30 controls, for example, the operation timing, rotation direction, rotation speed, rotation angle, and others of a servo motor constituting the die opening and closing mechanism.

### <Turntable>

Refer again to FIG. 2 and FIG. 3. The turntable 23 as the movable plate member is a disk made of metal. The turntable 23 is rotatably supported and rotates with respect to the fixed platen 22. Note that the turntable 23 is sometimes referred to as a "rotary table".

The central tie bar 26 penetrates not only the fixed platen 22 but also the turntable 23. More specifically, the central tie bar 26 penetrates the center of the turntable 23. The turntable 23 rotates around the tie bar 26 that penetrates its center as the rotation axis.

The turntable 23 is driven to rotate around the tie bar 26 by a rotational driving mechanism composed of a motor, pulleys, belts, and others. The rotation angle of the turntable 23 is not particularly limited, but the turntable 23 in this embodiment can rotate ±180 degrees.

Note that the upper movable platen 24 is provided with an insertion hole 27 into which the heating cylinder 11 of the injection apparatus 10 is inserted.

### <Molding Die>

A plurality of molding dies can be attached to the mold clamping apparatus 20. In this embodiment, two lower molding dies B1 and B2 can be attached to an upper surface 23a of the turntable 23. The two lower molding dies B1 and B2 can be attached at positions that are apart by 180 degrees in the rotation direction of the turntable 23. On the other hand, one upper molding die A (FIG. 1) can be attached to the upper movable platen 24.

As described above, the turntable 23 can rotate ±180 degrees. Therefore, by rotating the turntable 23, the lower molding die B1 or the lower molding die B2 can be selectively made to face the upper molding die A.

From another perspective, by rotating the turntable 23 180 degrees, the lower molding die that faces the upper molding die A can be switched. In other words, by rotating the turntable 23 180 degrees, the combination of the upper and lower molding dies can be changed.

Here, the position of the turntable 23 when the lower molding die B1 faces the upper molding die A is defined as a "reference rotation position". Understandably, this definition is merely for the convenience of description.

As described above, the lower molding die B1 and the lower molding die B2 are attached at positions that are apart by 180 degrees on the turntable 23. Therefore, when the turntable 23 is located at the reference rotation position, the lower molding die B1 is arranged on a non-operation side and faces the upper molding die A, and the lower molding die B2 is arranged on an operation side.

Thereafter, when the turntable 23 rotates +180 degrees or -180 degrees with respect to the reference rotation position, the lower molding die B2 is arranged on the non-operation side instead of the lower molding die B1 and faces the upper molding die A, and the lower molding die B1 is arranged on the operation side.

Understandably, the number of lower molding dies attached to the turntable 23 may be one or may be three or more. For example, in another embodiment, four lower molding dies can be attached to the turntable 23. In this case, the lower molding die that faces the upper molding die A is changed every time the turntable 23 rotates 90 degrees.

Furthermore, when a plurality of lower molding dies are attached to the turntable 23, the plurality of lower molding dies may be of the same type or different types. For example, a plurality of lower molding dies having different cavity shapes may be attached to the turntable 23.

In any case, the combination of molding dies is changed by rotating the turntable 23. From another perspective, in order to change the combination of molding dies, it is necessary to rotate the turntable 23. Therefore, it is desirable that the turntable 23 always rotates smoothly.

Note that the upper molding die A may be attached directly to the upper movable platen 24, or may be held by a clamper provided on the upper movable platen 24. When the clamper is provided on the upper movable platen 24, the clamper is also controlled by the controller 30.

The temperature of at least one of the upper molding die A and the lower molding dies B1 and B2 may be adjusted. More specifically, a temperature controller configured to supply a heat medium to at least one of the upper molding die A and the lower molding dies B1 and B2 may be provided. For example, the temperature controller maintains the temperature of the upper molding die A and the lower molding dies B1 and B2 at a temperature suitable for molding.

### <Plate>

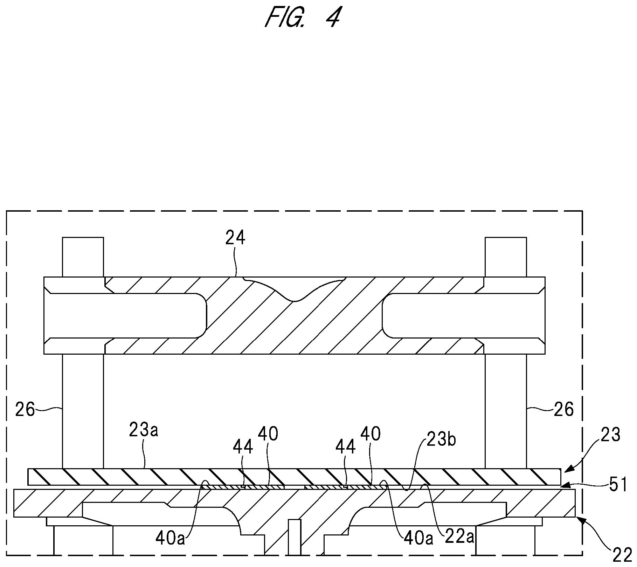

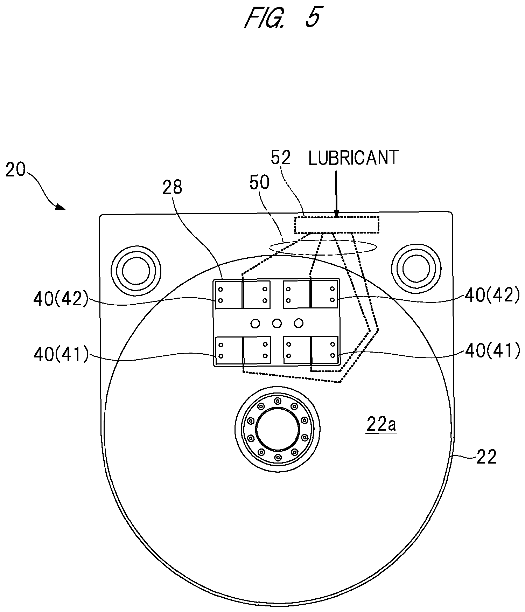

FIG. 4 is a cross-sectional view taken along the line A-A in FIG. 2. FIG. 5 is a plan view illustrating an upper surface 22a of the fixed platen 22. A plurality of plates 40 are provided between the fixed platen 22 and the turntable 23. The turntable 23 is supported by the plurality of plates 40 so as to be operable (rotatable) with respect to the fixed platen 22.

Each of the plates 40 is a metal plate having a roughly rectangular planar shape, and is generally referred to as a "wear plate" or "slide plate". In this embodiment, four plates 40 are provided on the fixed platen 22.

The four plates 40 are placed on a base 28 formed in a region of the fixed platen 22 that faces the upper movable platen 24. More specifically, two plates 41 are arranged side by side on a near side (operation side) on the base 28, and two other plates 42 are arranged side by side on a far side (non-operation side) on the base 28. Note that the illustration of the base 28 is omitted in FIG. 4 for the sake of convenience.

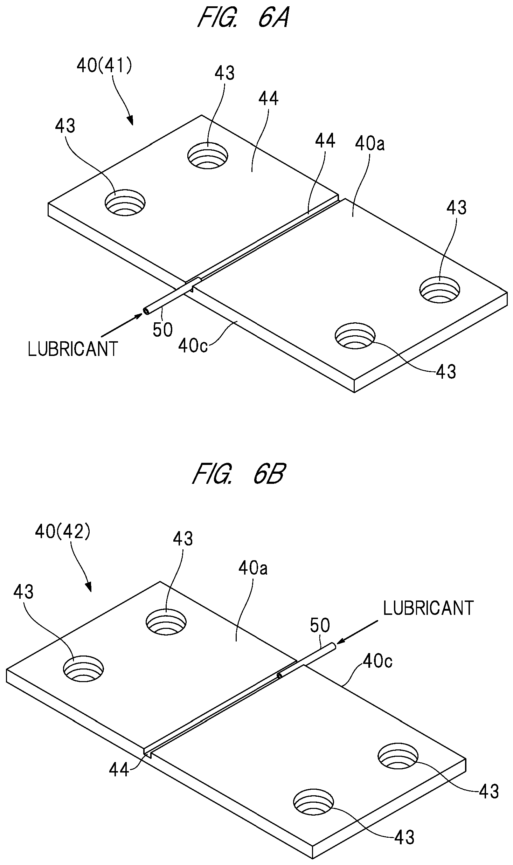

FIG. 6A is an enlarged perspective view illustrating the plate 41, and FIG. 6B is an enlarged perspective view illustrating the plate 42. Understandably, all the plates 40 have the same or substantially the same shape.

Through holes 43 are provided at the four corners of the plate 40. Each of the plates 40 is fixed to the fixed platen 22 by bolts (not illustrated) that are inserted into the through holes 43.

An upper surface 40a of the plate 40 that faces a lower surface 23b of the turntable 23 is a support surface that rotatably supports the turntable 23. From another perspective, the turntable 23 slides on the upper surface 40a of the plate 40.

Here, in order to rotate the turntable 23 smoothly, a lubricant (grease) is supplied to the upper surface 40a of the plate 40 from a lateral side of the plate 40. In addition, a groove 44 capable of holding the supplied lubricant is formed in the upper surface 40a of the plate 40.

### <Pipe>

As illustrated in FIG. 5, the mold clamping apparatus 20 includes a plurality of pipes 50 that form flow paths for supplying a lubricant to each plate 40. Each of the pipes 50 is a flexible tube made of a resin.

In this embodiment, one pipe 50 is provided for each plate 40. Namely, the mold clamping apparatus 20 includes four pipes 50 in total. Understandably, two or more pipes 50 may be provided for each plate 40.

As described above, the plate 40 interposed between the fixed platen 22 and the turntable 23 is placed on the base 28 formed on the upper surface 22a of the fixed platen 22. As a result, a gap 51 (FIG. 4) exists between the upper surface 22a of the fixed platen 22 and the lower surface 23b of the turntable 23 facing each other.

Each of the pipes 50 passes through the gap 51 between the fixed platen 22 and the turntable 23 to reach the corresponding plate 40. More specifically, at least a part of each pipe 50 is routed in the gap 51.

One end (base end) of each pipe 50 joins near the turntable 23. As a result, a lubricant is supplied to each of the pipes 50 via a junction portion 52. From another perspective, the lubricant pumped to the junction portion 52 by the pump is distributed to each pipe 50 at the junction portion 52.

On the other hand, as illustrated in FIG. 6A and FIG. 6B, the other end (tip end) of each pipe 50 is inserted from the lateral side of the plate 40 into the groove 44 formed in the upper surface 40a of the plate 40. In other words, the tip of each pipe 50 crosses a side surface 40c of the plate 40 to enter the groove 44 provided in the plate 40.

More specifically, the tip of the pipe 50 that supplies a lubricant to the plate 41 crosses the side surface 40c of the plate 41 on the operation side to enter the groove 44. On the other hand, the tip of the pipe 50 that supplies a lubricant to the plate 42 crosses the side surface 40c of the plate 42 on the non-operation side to enter the groove 44.

From another perspective, the tip of the pipe 50 that supplies a lubricant to the plate 41 crosses the front surface of the plate 41 to enter the groove 44. The tip of the pipe 50 that supplies a lubricant to the plate 42 crosses the back surface of the plate 42 to enter the groove 44.

The lubricant is supplied to the groove 44 formed in the upper surface 40a of the plate 40 through the flow path formed by each pipe 50. The lubricant supplied to the groove 44 is held in the groove 44.

Also, a part of the lubricant supplied to the groove 44 overflows from the groove 44 and spreads onto the upper surface 40a of the plate 40. As a result, the frictional resistance between the plate 40 and the turntable 23 is reduced, and the turntable 23 rotates smoothly.

Furthermore, by supplying (replenishing) a lubricant to the groove 44 periodically or as needed, the smooth rotation of the turntable 23 can be maintained.

Understandably, even if a necessary and sufficient amount of lubricant is supplied, it is not possible to completely prevent the wear of the plate 40 and the turntable 23. Therefore, the turntable 23 and the plate 40 wear as the turntable 23 rotates, and metal powder is generated.

However, in this embodiment, the pipe 50 is introduced from the lateral side (front side or back side) of the plate 40 into the groove 44 provided in the upper surface 40a of the plate 40. Therefore, compared with the case in which the pipe 50 is introduced from the lower side of the plate 40 into the groove 44 provided in the upper surface 40a of the plate 40, the intrusion of metal powder into the pipe 50 is prevented or suppressed.

Note that the intrusion of metal powder into the pipe 50 can be prevented or suppressed also by supplying a lubricant from the lateral side (right side or left side) of the plate 40. From another perspective, the "lateral side" of the plate 40 does not include the lower side, but includes the front side, back side, right side, and left side.

Therefore, in another embodiment, the tip of the pipe 50 crosses the right side surface or left side surface of the plate 40 to enter the groove 44.

As described above, in this embodiment, clogging of the lubricant supply port and flow path is prevented or suppressed. As a result, smooth rotation of the turntable 23 is maintained for a long period of time. From another perspective, the frequency of maintenance of the mold clamping apparatus 20 is reduced, and the effort and time required for maintenance can also be reduced.

### (Second Embodiment)

Next, another embodiment of the injection molding machine will be described. Understandably, the injection molding machine according to this embodiment is a vertical injection molding machine having the same basic structure as the injection molding machine 1 according to the first embodiment. Therefore, the description of the same or substantially the same configuration as that of the injection molding machine 1 according to the first embodiment will be omitted, and only the differences will be described.

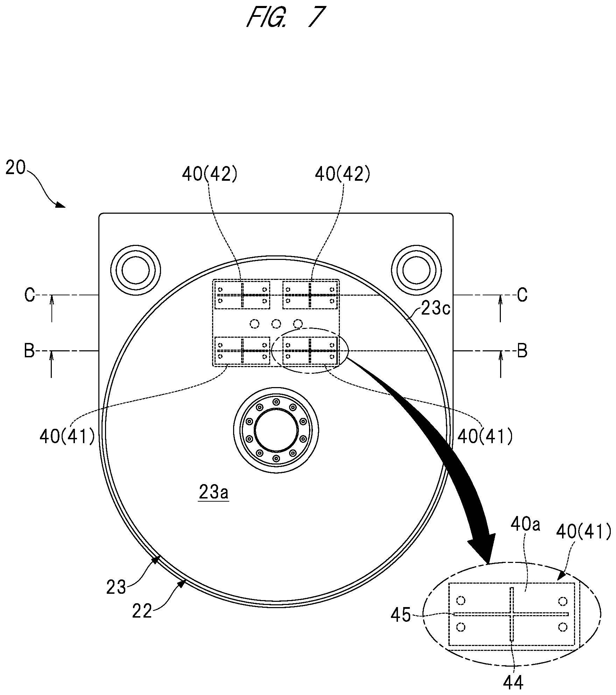

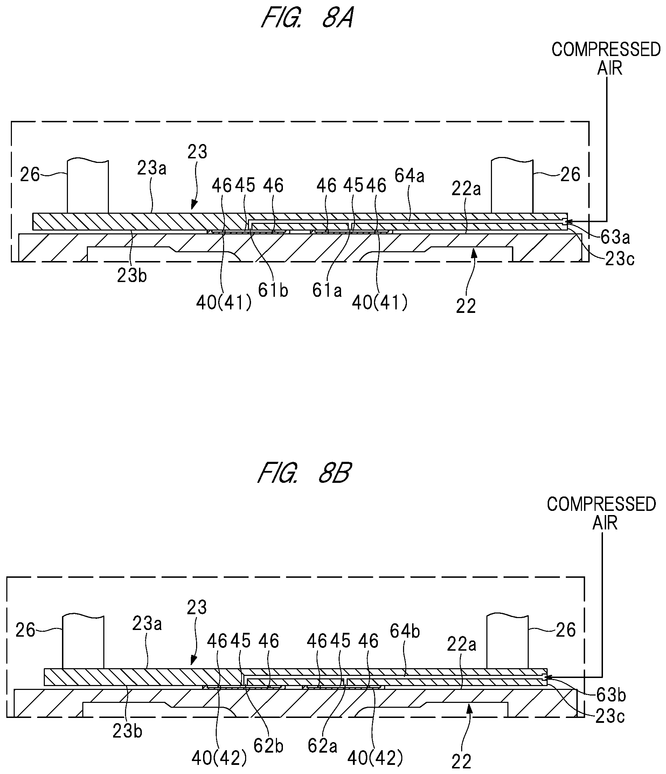

FIG. 7 is a plan view illustrating the fixed platen 22 and the turntable 23 of the mold clamping apparatus 20 constituting the injection molding machine according to this embodiment. FIG. 8A is a cross-sectional view taken along the line B-B in FIG. 7, and FIG. 8B is a cross-sectional view taken along the line C-C in FIG. 7.

As in the first embodiment, the fixed platen 22 is provided with the plurality of plates 40. More specifically, two plates 41 and two plates 42 are fixed to the fixed platen 22. Also, the turntable 23 is supported by the plates 41 and 42 fixed to the fixed platen 22 so as to be operable (rotatable) with respect to the fixed platen 22.

### <Plate>

Each of the plates 40 is provided with a groove. However, the plate 40 of this embodiment is provided with more grooves than the plate 40 of the first embodiment.

More specifically, a groove 45 is provided in the upper surface 40a of the plate 40 of this embodiment in addition to the groove 44. The groove 45 is provided at the center of the plate 40 in the width direction and extends in the longitudinal direction (length direction) of the plate 40.

Furthermore, the groove 45 intersects (orthogonally) with the groove 44 at the center of the groove 44 in the longitudinal direction. In other words, the groove 44 is divided into two by the groove 45.

In the following description, the groove 44 may be referred to as a "vertical groove 44" and the groove 45 may be referred to as a "horizontal groove 45" for distinction. Understandably, this distinction is merely for the convenience of description.

A lubricant is supplied to at least one of the vertical groove 44 and the horizontal groove 45 of each plate 40. The lubricant is supplied periodically or as needed.

The lubricant may be supplied to the vertical groove 44 and the horizontal groove 45 from the lateral side of the plate 40 as in the first embodiment, or may be supplied from the lower side of the plate 40.

In this embodiment, the lubricant is supplied from the lower side of the plate 40. Although not illustrated in the drawing, a grease supply hole that communicates with one end of the horizontal groove 45 is provided in the plate 40. One end (upper end/outlet) of the grease supply hole opens to the bottom surface of the horizontal groove 45, and the other end (lower end/inlet) of the grease supply hole opens to a lower surface of the plate 40.

Furthermore, a grease supply passage that passes through the fixed platen 22 and communicates with the inlet of the grease supply hole is provided in the fixed platen 22. The lubricant is fed into the grease supply passage by a pump or the like. The lubricant fed into the grease supply passage flows out from the outlet of the grease supply hole into the horizontal groove 45. The lubricant that flows out into the horizontal groove 45 flows into the vertical groove 44 via the horizontal groove 45.

As a result, the lubricant is supplied to and held in the horizontal groove 45 and the vertical groove 44. Furthermore, a part of the lubricant overflows from the horizontal groove 45 and the vertical groove 44 and spreads onto the upper surface 40a of the plate 40.

Understandably, the grease supply hole provided in the plate 40 may communicate with the vertical groove 44, or may communicate with the vertical groove 44 and the horizontal groove 45.

### <Injection Port, Supply Port, Flow Path>

Injection ports 61a, 61b, 62a, and 62b from which compressed air is discharged are provided in the lower surface 23b of the turntable 23. In addition, supply ports 63a and 63b to which compressed air is introduced are provided in an outer peripheral surface 23c of the turntable 23.

Furthermore, a flow path 64a connecting the supply port 63a and the injection ports 61a and 61b and a flow path 64b connecting the supply port 63b and the injection ports 62a and 62b are provided inside the turntable 23.

From another perspective, a through hole (tunnel) connecting the inlet provided in the outer peripheral surface 23c to the outlet provided in the lower surface 23b is formed inside the turntable 23.

Therefore, when compressed air is introduced (supplied) to the supply ports 63a and 63b, the compressed air is discharged (sprayed) from the lower surface 23b of the turntable 23 that faces the upper surface 40a of the plate 40. More specifically, the compressed air is sprayed from each of the injection ports 61a, 61b, 62a, and 62b provided in the lower surface 23b of the turntable 23.

The injection ports 61a, 61b, 62a, and 62b are provided at positions facing the upper surface 40a of the plate 40 when the turntable 23 is at the reference rotation position. Therefore, when compressed air is introduced into the supply ports 63a and 63b in the state where the turntable 23 is located at the reference rotation position, the compressed air is sprayed toward the upper surface 40a of each plate 40. In other words, the compressed air is supplied to each plate 40.

More specifically, the injection port 61a faces the center or approximate center of the horizontal groove 45 of one plate 41 in the longitudinal direction when the turntable 23 is located at the reference rotation position. Furthermore, the injection port 61b faces the center or approximate center of the horizontal groove 45 of the other plate 41 in the longitudinal direction when the turntable 23 is located at the reference rotation position.

The injection port 62a faces the center or approximate center of the horizontal groove 45 of one plate 42 in the longitudinal direction when the turntable 23 is located at the reference rotation position. Furthermore, the injection port 62b faces the center or approximate center of the horizontal groove 45 of the other plate 42 in the longitudinal direction when the turntable 23 is located at the reference rotation position.

Therefore, when compressed air is supplied to the supply ports 63a and 63b in the state where the turntable 23 is located at the reference rotation position, the compressed air is sprayed toward the center or approximate center of the horizontal groove 45 of each plate 40.

As a result, metal powder and old lubricant that have accumulated in the horizontal groove 45 and vertical groove 44 are expelled to the periphery of the plate 40. In other words, the horizontal groove 45 and the vertical groove 44 of the plate 40 are cleaned. Namely, the surface of the plate 40 is purified.

Then, by supplying a new lubricant to the cleaned horizontal groove 45 and vertical groove 44, the support state of the turntable 23 is restored to its initial favorable state. From another perspective, by supplying a new lubricant to the cleaned horizontal groove 45 and vertical groove 44, the lubrication state of the plate 40 is restored to its initial favorable state.

Therefore, by periodically performing the above-mentioned maintenance method for the mold clamping apparatus 20 (cleaning of the plate 40 using compressed air and grease supplying to the plate 40), the smooth rotation of the turntable 23 can be maintained for a long period of time.

For example, by performing the above-mentioned maintenance method once every few months, the smooth rotation of the turntable 23 can be maintained for a long period of time. In addition, by performing the above-mentioned maintenance method every time the number of moldings (number of shots) reaches a specified number of times, the smooth rotation of the turntable 23 can be maintained for a long period of time.

Regardless of the criteria for determining the timing of maintenance, a message or the like notifying that the time to perform the maintenance has arrived may be displayed on a monitor provided in the controller 30.

In the above-mentioned maintenance method, it is not necessary to lift or detach the turntable 23. In other words, according to the above-mentioned maintenance method, the mold clamping apparatus 20 can be easily maintained in a short time.

Note that the introduction of compressed air to the supply ports 63a and 63b can be achieved by inserting a nozzle of a supply source of the compressed air (for example, an air gun) into the supply ports 63a and 63b. Also, the compressed air can be introduced to the supply ports 63a and 63b by connecting a supply source of the compressed air (for example, an air compressor) to the supply ports 63a and 63b.

The supply source of the compressed air may be temporarily inserted or connected to the supply ports 63a and 63b when performing the maintenance method, or may be constantly inserted or connected to the supply ports 63a and 63b. In the latter case, the mold clamping apparatus 20 can be automatically maintained periodically.

### (Third Embodiment)

Another embodiment of the injection molding machine will be described. Understandably, the injection molding machine according to this embodiment is a vertical injection molding machine having the same basic structure as the injection molding machine 1 according to the first embodiment. Therefore, the description of the same or substantially the same configuration as that of the injection molding machine 1 according to the first embodiment will be omitted, and only the differences will be described.

### <Mold Clamping Apparatus>

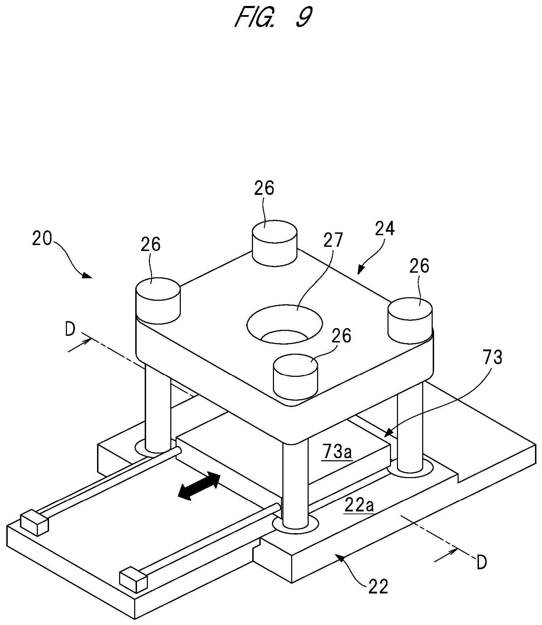

FIG. 9 is a perspective view illustrating a main part of the mold clamping apparatus 20 constituting the injection molding machine according to this embodiment. The mold clamping apparatus 20 includes the fixed platen 22, a movable plate member 73, and the upper movable platen 24. The fixed platen 22 is fixed to a housing or frame (not illustrated), and the movable plate member 73 is placed on the fixed platen 22.

The movable plate member 73 in this embodiment is a slide plate operable (linearly movable) with respect to the fixed platen 22.

### <Slide Plate>

Although the slide plate 73 operates in a different manner from the turntable 23, but has substantially the same function. Specifically, a lower molding die can be attached to the slide plate 73 like the turntable 23. More specifically, a lower molding die can be attached to an upper surface 73a of the slide plate 73.

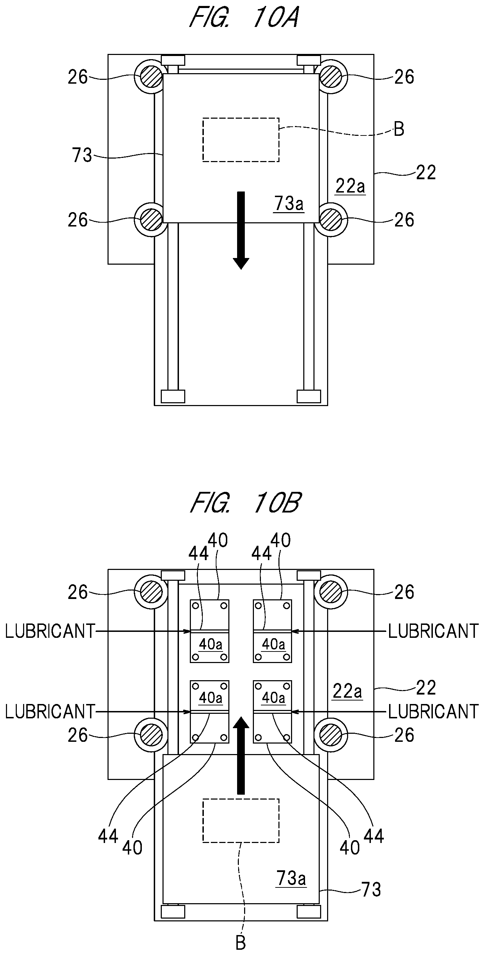

The slide plate 73 reciprocates between a position (forward position) illustrated in FIG. 10A and a position (backward position) illustrated in FIG. 10B.

When the slide plate 73 moves from the backward position (FIG. 10B) to the forward position (FIG. 10A), the lower molding die B attached to the slide plate 73 is inserted below the upper movable platen 24 and faces the upper molding die attached to the upper movable platen 24.

On the other hand, when the slide plate 73 moves from the forward position (FIG. 10A) to the backward position (FIG. 10B), the lower molding die B attached to the slide plate 73 is pulled out from below the upper movable platen 24.

Therefore, it is desirable that the slide plate 73 always operates (linearly moves) smoothly like the turntable 23.

### <Plate>

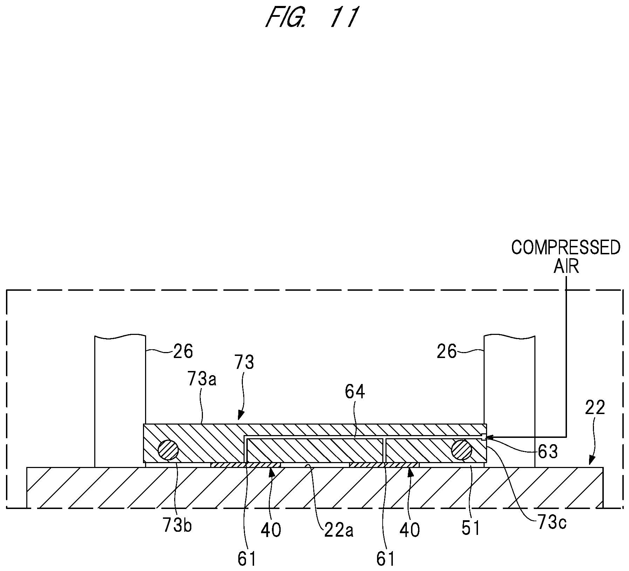

FIG. 11 is a cross-sectional view taken along the line D-D in FIG. 9. The slide plate 73 is supported by a plurality of plates 40 provided on the upper surface 22a of the fixed platen 22 so as to be able to reciprocate (slidable).

In this embodiment, as illustrated in FIG. 10B, four plates 40 are provided on the upper surface 22a of the fixed platen 22. Furthermore, a lubricant (grease) is supplied from the lateral side of the plate 40 to the upper surface 40a of the plate 40 that faces a lower surface 73b of the slide plate 73.

The lubricant is supplied to the groove 44 of each plate 40 through the pipe as in the first embodiment. In addition, at least a part of the pipe that supplies the lubricant to the plate 40 is routed in the gap 51 (FIG. 11) between the fixed platen 22 and the slide plate 73.

### <Injection Port, Supply Port, Flow Path>

A plurality of injection ports 61 from which compressed air is discharged are provided in the lower surface 73b of the slide plate 73. In addition, a supply port 63 to which compressed air is introduced is provided in an outer peripheral surface 73c of the slide plate 73. Furthermore, a flow path 64 connecting the supply port 63 and the injection port 61 is provided inside the slide plate 73.

Each of the injection ports 61 is provided at a position facing the upper surface 40a of a predetermined plate 40 when the slide plate 73 is at the forward position. Therefore, when compressed air is introduced into the supply port 63 in the state where the slide plate 73 is located at the forward position, the compressed air is sprayed toward the upper surface 40a of each plate 40. In other words, the compressed air is supplied to each plate 40.

As a result, metal powder and old lubricant that have accumulated in the groove 44 are expelled to the periphery of the plate 40. In other words, the groove 44 of the plate 40 is cleaned. Namely, the surface of the plate 40 is purified.

The present invention is not limited to the embodiments described above, and various modifications are possible within the range not departing from the gist of the present invention. For example, the number, arrangement, shape, and others of the plates can be changed as appropriate. In addition, the number, arrangement, shape, and others of the grooves provided in the plates can also be changed as appropriate.

When the number of plates and grooves is changed, it is preferable to change the number and arrangement of the pipes, injection ports, supply ports, and flow paths as appropriate.

It is not essential that the injection port faces the plate when the turntable is at the reference rotation position. Similarly, it is not essential that the injection port faces the plate when the slide plate is at the forward position.

Even if the injection port is located at a position different from the above, it can be made to face the plate by rotating the turntable or moving the slide plate linearly.

The pipe forming the flow path of lubricant is not limited to a tube made of resin. The pipe can be replaced with another flexible pipe member having a length that does not interfere with the rotation of the turntable or the linear movement of the slide plate.

It is also possible to adopt a structure in which the pipe length is shortened by using a rotary joint or the like for the connection of the pipes so as not to interfere with the operation of the turntable or slide plate.

The flow path of compressed air may be formed by tubes or pipes embedded in the turntable or slide plate. A ripple or connector for connecting a hose or the like extending from a supply source of compressed air may be provided at the supply port.
Further embodiments are described in the following items:
Item 1. A vertical mold clamping apparatus comprising:
   a fixed platen;
   a movable plate member which is placed on the fixed platen and to which a lower molding die can be attached;
   a movable platen to which an upper molding die can be attached; and
   a plate which is provided between the fixed platen and the movable plate member and supports the movable plate member so as to be operable with respect to the fixed platen,
   wherein a lubricant is supplied from a lateral side of the plate to an upper surface of the plate that faces a lower surface of the movable plate member.
Item 2. The vertical mold clamping apparatus according to item 1,
   wherein a groove capable of holding the lubricant is formed in the upper surface of the plate.
Item 3. The vertical mold clamping apparatus according to item 2, further comprising a pipe forming a flow path of the lubricant,
   wherein one end of the pipe crosses a side surface of the plate to enter the groove.
Item 4. The vertical mold clamping apparatus according to item 3,
   wherein at least a part of the pipe is routed in a gap between the fixed platen and the movable plate member.
Item 5. The vertical mold clamping apparatus according to item 1,
   wherein the movable plate member is a turntable configured to rotate with respect to the fixed platen.
Item 6. The vertical mold clamping apparatus according to item 1,
   wherein the movable plate member is a slide plate configured to move linearly with respect to the fixed platen.
Item 7. A vertical injection molding machine comprising:
   a vertical mold clamping apparatus to which a molding die can be attached; and
   an injection apparatus configured to inject a molding material to the molding die attached to the vertical mold clamping apparatus,
   wherein the vertical mold clamping apparatus includes a fixed platen, a movable plate member, a movable platen, and a plate,
   wherein a lower molding die can be attached to the movable plate member and an upper molding die can be attached to the movable platen,
   wherein the plate is provided between the fixed platen and the movable plate member and supports the movable plate member so as to be operable with respect to the fixed platen, and
   wherein a lubricant is supplied from a lateral side of the plate to an upper surface of the plate that faces a lower surface of the movable plate member.
Item 8. A vertical mold clamping apparatus comprising:
   a fixed platen;
   a movable plate member which is placed on the fixed platen and to which a lower molding die can be attached;
   a movable platen to which an upper molding die can be attached; and
   a plate which is provided between the fixed platen and the movable plate member and supports the movable plate member so as to be operable with respect to the fixed platen,
   wherein compressed air is sprayed toward the plate from a lower surface of the movable plate member that faces an upper surface of the plate.
Item 9. The vertical mold clamping apparatus according to item 8,
   wherein a groove capable of holding a lubricant is formed in the upper surface of the plate, and
   wherein the compressed air is sprayed toward the groove.
Item 10. The vertical mold clamping apparatus according to item 8,
   wherein an injection port from which the compressed air is discharged is provided in the lower surface of the movable plate member,
   wherein a supply port to which the compressed air is introduced is provided in an outer peripheral surface of the movable plate member, and
   wherein a flow path connecting the supply port and the injection port is provided inside the movable plate member.
Item 11. The vertical mold clamping apparatus according to item 8,
   wherein the movable plate member is a turntable configured to rotate with respect to the fixed platen.
Item 12. The vertical mold clamping apparatus according to item 8,
   wherein the movable plate member is a slide plate configured to move linearly with respect to the fixed platen.
Item 13. A vertical injection molding machine comprising:
   a vertical mold clamping apparatus to which a molding die can be attached; and
   an injection apparatus configured to inject a molding material to the molding die attached to the vertical mold clamping apparatus,
   wherein the vertical mold clamping apparatus includes a fixed platen, a movable plate member, a movable platen, and a plate,
   wherein a lower molding die can be attached to the movable plate member and an upper molding die can be attached to the movable platen,
   wherein the plate is provided between the fixed platen and the movable plate member and supports the movable plate member so as to be operable with respect to the fixed platen, and
   wherein compressed air is sprayed toward the plate from a lower surface of the movable plate member that faces an upper surface of the plate.
Item 14. A maintenance method of a vertical mold clamping apparatus, the vertical mold clamping apparatus comprising a fixed platen, a movable plate member which is placed on the fixed platen, and a plate which is provided between the fixed platen and the movable plate member and supports the movable plate member so as to be operable,
   wherein compressed air is supplied to the plate through a flow path provided inside the movable plate member, thereby purifying a surface of the plate.
Item 15. The maintenance method of the vertical mold clamping apparatus according to item 14,
   wherein the compressed air is sprayed toward the plate from a lower surface of the movable plate member that faces an upper surface of the plate.
Item 16. The maintenance method of the vertical mold clamping apparatus according to item 15,
   wherein the compressed air is sprayed toward a groove capable of holding a lubricant formed in the upper surface of the plate.

## Claims

1. A vertical mold clamping apparatus comprising:
a fixed platen;
a movable plate member which is placed on the fixed platen and to which a lower molding die can be attached;
a movable platen to which an upper molding die can be attached; and
a plate which is provided between the fixed platen and the movable plate member and supports the movable plate member so as to be operable with respect to the fixed platen,
wherein compressed air is sprayed toward the plate from a lower surface of the movable plate member that faces an upper surface of the plate.

2. The vertical mold clamping apparatus according to claim 1,
wherein a groove capable of holding a lubricant is formed in the upper surface of the plate, and
wherein the compressed air is sprayed toward the groove.

3. The vertical mold clamping apparatus according to claim 1,
wherein an injection port from which the compressed air is discharged is provided in the lower surface of the movable plate member,
wherein a supply port to which the compressed air is introduced is provided in an outer peripheral surface of the movable plate member, and
wherein a flow path connecting the supply port and the injection port is provided inside the movable plate member.

4. The vertical mold clamping apparatus according to claim 1,
wherein the movable plate member is a turntable configured to rotate with respect to the fixed platen.

5. The vertical mold clamping apparatus according to claim 1,
wherein the movable plate member is a slide plate configured to move linearly with respect to the fixed platen.

6. A vertical injection molding machine comprising:
a vertical mold clamping apparatus to which a molding die can be attached; and
an injection apparatus configured to inject a molding material to the molding die attached to the vertical mold clamping apparatus,
wherein the vertical mold clamping apparatus includes a fixed platen, a movable plate member, a movable platen, and a plate,
wherein a lower molding die can be attached to the movable plate member and an upper molding die can be attached to the movable platen,
wherein the plate is provided between the fixed platen and the movable plate member and supports the movable plate member so as to be operable with respect to the fixed platen, and
wherein compressed air is sprayed toward the plate from a lower surface of the movable plate member that faces an upper surface of the plate.

7. A maintenance method of a vertical mold clamping apparatus, the vertical mold clamping apparatus comprising a fixed platen, a movable plate member which is placed on the fixed platen, and a plate which is provided between the fixed platen and the movable plate member and supports the movable plate member so as to be operable,
wherein compressed air is supplied to the plate through a flow path provided inside the movable plate member, thereby purifying a surface of the plate.

8. The maintenance method of the vertical mold clamping apparatus according to claim 7,
wherein the compressed air is sprayed toward the plate from a lower surface of the movable plate member that faces an upper surface of the plate.

9. The maintenance method of the vertical mold clamping apparatus according to claim 8,
wherein the compressed air is sprayed toward a groove capable of holding a lubricant formed in the upper surface of the plate.
